# EUROPÄISCHE PATENTSCHRIFT

(11) **EP 0 709 243 B1**
(45) Veröffentlichungstag und Bekanntmachung des Hinweises auf die Patenterteilung: **16.12.1998**
(21) Anmeldenummer: 95113449.3
(22) Anmeldetag: 28.08.1995
(51) Int. Cl.: B60J 7/12, F15B 15/14

(54) **Verdeck für ein Fahrzeug, insbesondere Kraftfahrzeug**
Top for vehicle, particularly for motor vehicle
Capote de véhicule, en particulier pour automobile

(30) Priorität: 31.10.1994 DE 4438925
(43) Veröffentlichungstag der Anmeldung: 01.05.1996
(73) Patentinhaber: Dr.Ing.h.c. F. Porsche Aktiengesellschaft, 70435 Stuttgart (DE)
(72) Erfinder: Mayer, Hartmut, D-71254 Ditzingen (DE); Henn, Uwe, D-71299 Wimsheim (DE)

(56) Entgegenhaltungen:
- DE-C- 889 270
- US-A- 2 550 925

## Beschreibung

Die Erfindung betrifft ein Verdeck für ein Fahrzeug, insbesondere Kraftfahrzeug, mit einem an aufbauseitig angeordneten Verdecklagern schwenkbar gelagerten Verdeckgestänge, wobei zur Unterstützung der Öffnungs- und Schließbewegung des Verdecks am Verdeckgestänge benachbart zumindest eines Verdecklagers ein aus einem Zylinder und einer Kolbenstange zusammengesetzter Arbeitszylinder angreift.

Ein Faltverdeck der eingangs genannten Art geht aus der DE-PS 889 270 hervor. Diese beschreibt ein Faltverdeck, bestehend aus Verdeckgestänge und Verdeckbezug, wobei das Verdeckgestänge an zwei seitlich an der Fahrzeugkarosserie angebrachten Verdecklagern befestigt ist. Zum Öffnen und Schließen des Verdecks sind zwei hydraulische Arbeitszylinder vorgesehen, die an einem Ende an der Karosserie des Fahrzeugs befestigt sind. Die Kolbenstangen der Arbeitszylinder sind an je einem Antriebshebel angelenkt, die auf das Verdeckgestänge derart einwirken, daß sich das Faltverdeck öffnen und schließen läßt.

Nachteilig an dieser bekannten Ausführung ist, daß die Arbeitszylinder durch ihre Befestigung an der Karosserie viel Bauraum in Anspruch nehmen. Ferner führen zu den Arbeitszylindern bewegliche Druckölzuleitungen, die der Bewegung der Zylinder folgen und durch Reibung an Fahrzeugteilen beschädigt werden können bzw. es können die Schlauchleitungen durchgescheuert werden. Außerdem sind die Arbeitszylinder bei der Montage des Faltverdecks an der Fahrzeugkarosserie gesondert zu befestigen, was bei der Fahrzeugmontage zeitaufwendig ist.

Aufgabe der Erfindung ist es, ein Verdeck für ein Fahrzeug der eingangs genannten Art derart auszubilden, daß die beschriebenen Nachteile vermieden werden.

Erfindungsgemäß wird diese Aufgabe durch die kennzeichnenden Merkmale des Patentanspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch eine spezielle Ausbildung und Anbringung des Arbeitszylinders minimaler Raum in Anspruch genommen wird. Diese spezielle Ausbildung ermöglicht eine Druckölzuleitung zu den Arbeitszylindern über starre Leitungen, so daß bewegliche Leitungen entfallen, außerdem kann das komplette Faltverdeck als vor montierte Einheit, einschließlich der Arbeitszylinder, an der Fahrzeugkarosserie befestigt werden.

Durch eine ortsfeste Anbringung der Kolbenstange am Verdecklager und einem auf der Kolbenstange beweglichen Zylinder, der mit einem Antriebshebel des Faltverdecks in Verbindung steht, wird der Platzbedarf für den Arbeitszylinder minimiert, da keine Abstützung des Arbeitszylinders an der Fahrzeugkarosserie mehr erforderlich ist. Bei einer Zufuhr des Drucköls zum Arbeitszylinder durch die stationäre Kolbenstange können starre Leitungen Verwendung finden, wodurch bewegliche Leitungen, die größer im Volumen und anfällig gegen Scheuern sind, entfallen.

Ferner ist das komplette Verdeck, einschließlich der Arbeitszylinder vormontierbar und kann als fertige Baueinheit in die Fahrzeugkarosserie eingesetzt werden; lediglich der Anschluß der starren Druckölzuleitungen an die Enden der Kolbenstange muß noch erfolgen.

Ein Ausführungsbeispiel der Erfindung ist in der Zeichnung dargestellt und wird im folgenden näher beschrieben.

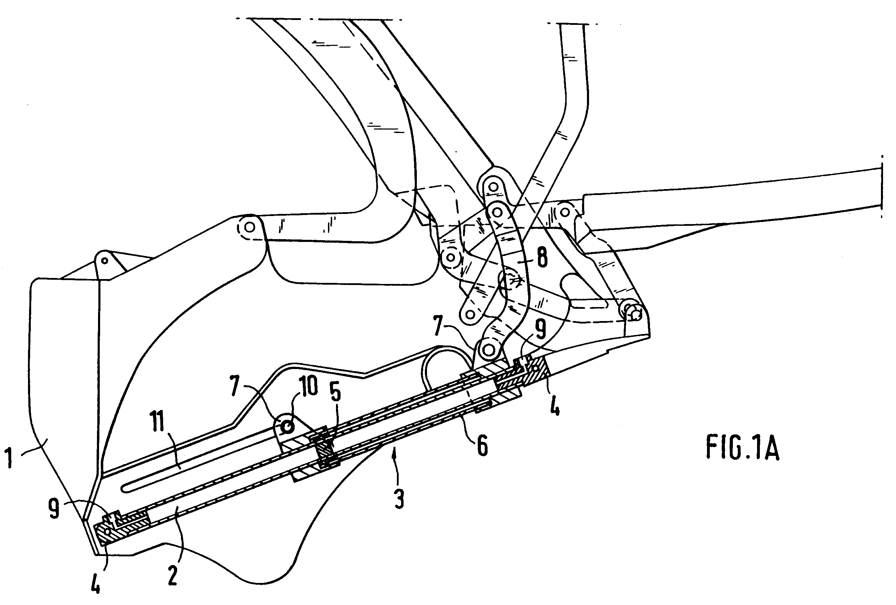

Es zeigt
- Fig.1a: eine Seitenansicht der Verdeck-Betätigungsvorrichtung bei geschlossenem Verdeck,

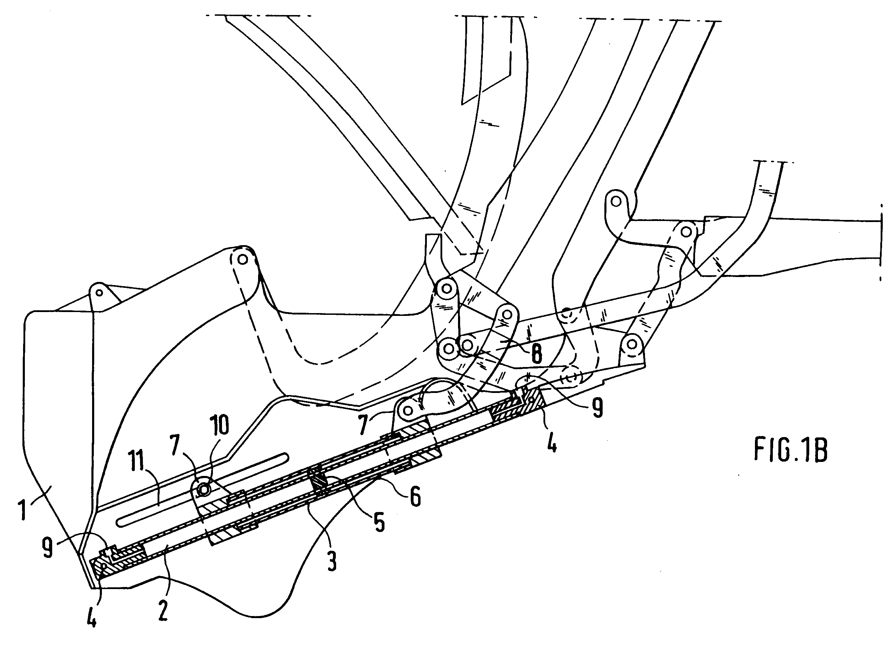

- Fig.1b: eine Seitenansicht der Verdeck-Betätigungsvorrichtung bei halbgeöffnetem Verdeck und

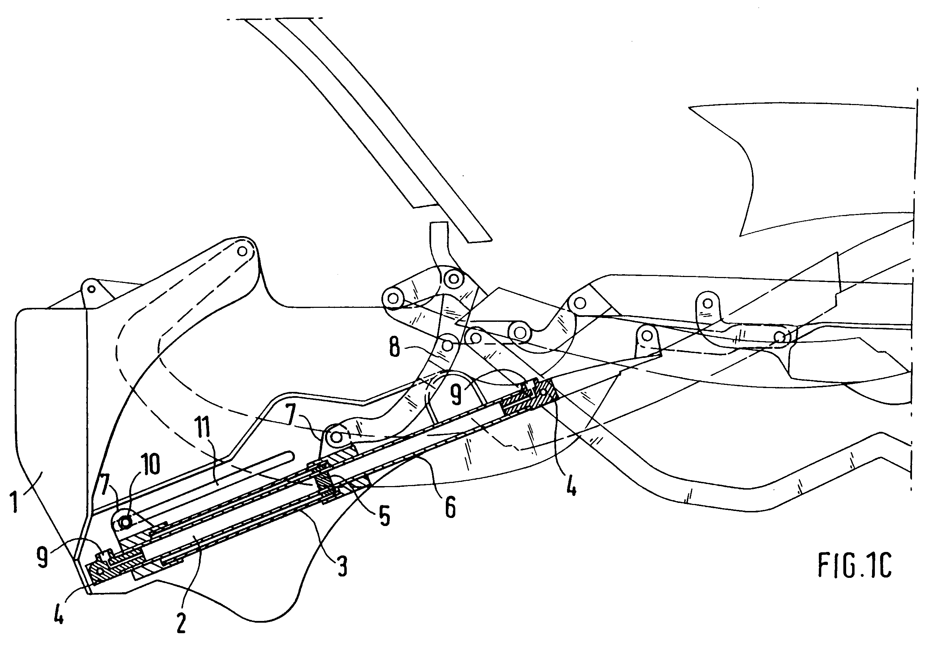

- Fig.1c: eine Seitenansicht der Verdeck-Betätigungsvorrichtung bei geöffnetem Verdeck.

In Figur 1a ist eine Seitenansicht eines Verdecklagers 1 mit den daran befestigten Bauteilen des Verdeckgestänges gezeigt, wobei sich das Faltverdeck in geschlossener Stellung befindet. Die Kolbenstange 2 eines Arbeitszylinders 3 ist an beiden Enden 4 am Verdecklager 1 befestigt. Der Kolben 5 ist mittig auf der Kolbenstange 2 angebracht. Der auf der ortsfesten Kolbenstange 2 gleitende Zylinder 6 ist an einem Ende 7 mit einem auf das Verdeckgestänge ein wirkenden Antriebshebel 8 verbunden.

Der Arbeitszylinder 3 zum Öffnen und Schließen des Verdecks ist als doppeltwirkender Zylinder 6 ausgebildet, d.h. er wirkt auf das Verdeckgestänge sowohl bei der Öffnungs- als auch der Schießbewegung ein. Die Druckölzuleitung erfolgt an beiden Enden 4 der Kolbenstange 2. Durch Bohrungen 9 in der Kolbenstange 2 wird das Drucköl in den jeweiligen Zylinderraum des Arbeitszylinders 3 geleitet.

Sollten räumliche Gegebenheiten eine außermittige Anbindung des Antriebshebels 8 am Zylinderende 7 erforderlich machen, so kann ein Verdrehen des Zylinders 6 durch einen, am anderen Ende 7 des Zylinders 6 befestigten Bolzen 10, der in einer Führung 11 des Verdecklagers 1 gleitet, verhindert werden. Selbstverständlich sind auch andere Verdrehsicherungen denkbar.

Das Faltverdeck wird, einschließlich der auf den Verdecklagern 1 befestigten Arbeitszylindern 3 als fertige Baueinheit vormontiert und anschließend an der Fahrzeugkarosserie befestigt.

Durch die ortsfeste Anbringung der Kolbenstange 2 auf dem Verdecklager 1 ergibt sich ein kompakter, raumsparender Aufbau.

Die Druckölzuleitung erfolgt über starre, an den Enden 4 der Kolbenstange 2 befestigte Leitungen.

Figur 1b zeigt eine Seitenansicht eines Verdecklagers 1 mit den daran befestigten Bauteilen des Verdeckgestänges und dem Verdeck in halb geöffneter Stellung. Die Druckölzuleitung erfolgte über das linke Ende 4 der Kolbenstange 2, um von der geschlossenen in die halb geöffnete Stellung des Verdecks zu gelangen.

Figur 1c zeigt eine Seitenansicht des Verdecks in voll geöffneter Stellung.

Das Öffnen des Verdecks erfolgt durch eine Druckölzuleitung über das rechte Ende 4 der Kolbenstange 2, diese Druckölzuleitung bewirkt, daß sich der Zylinder 6 nach rechts verschiebt, das Schließen durch eine Druckölzuleitung über des linke Ende 4 der Kolbenstange 2 und ein Verschieben des Zylinders 6 nach links.

Es hat sich als vorteilhaft erwiesen, an beiden Verdecklagern 1 einen Arbeitszylinder 3 vorzusehen, um ein gleichmäßiges, verzugfreies Betätigen des Verdecks sicherzustellen.

### Bezugszeichen:

- 1: Verdecklager
- 2: Kolbenstange
- 3: Arbeitszylinder (Kolbenstange 2 und Zylinder 6)
- 4: Enden (der Kolbenstange)
- 5: Kolben
- 6: Zylinder
- 7: Enden (des Zylinders)
- 8: Antriebshebel
- 9: Bohrungen
- 10: Bolzen
- 11: Führung

## Patentansprüche

1. Verdeck für ein Fahrzeug, insbesondere Kraftfahrzeug, mit einem an aufbauseitig angeordneten Verdecklagern (1) schwenkbar gelagerten Verdeckgestänge, wobei zur Unterstützung der Öffnungs- und Schließbewegung des Verdecks am Verdeckgestänge benachbart, zumindest eines Verdecklagers (1) ein aus einem Zylinder (6) und einer Kolbenstange (2) zusammengesetzter Arbeitszylinder (3) angreift, **dadurch gekennzeichnet**, daß beide Enden (4) der Kolbenstange (2) des Arbeitszylinders (3) ortsfest am Verdecklager (1) befestigt sind und der beweglich auf der Kolbenstange (2) angeordnete Zylinder (6) mit einem, das Faltverdeck öffnenden und schließenden Antriebshebel (8) in Wirkverbindung steht und die Druckölzuleitung zum Arbeitszylinder (3) durch Bohrungen (9) in der stationären Kolbenstange (2) erfolgt.

2. Verdeck nach Anspruch 1, **dadurch gekennzeichnet**, daß der Arbeitszylinder (3) als doppelt wirkender Zylinder (6) ausgebildet ist.

3. Verdeck nach Anspruch 1, **dadurch gekennzeichnet**, daß der Kolben (5) mittig an der Kolbenstange (2) angebracht ist und die Druckölzuleitung wechselweise von beiden Enden (4) der Kolbenstange (2) durch die Bohrungen (9) erfolgt.

4. Verdeck nach Anspruch 1, **dadurch gekennzeichnet**, daß die Anbindung des Antriebshebel (8) mittig an einem Zylinderende (7) angebracht ist.

5. Verdeck nach Anspruch 1, **dadurch gekennzeichnet**, daß die Anbindung des Antriebshebel (8) außermittig an einem Zylinderende (7) angebracht ist und am anderen Ende (7) des Zylinders (6) eine Verdrehsicherung vorgesehen ist.

6. Verdeck nach Anspruch 5, **dadurch gekennzeichnet**, daß die Verdrehsicherung aus einem am Zylinderende (7) angebrachten Bolzen (10) besteht, der in einer Führung (11) des Verdecklagers (1) gleitet.

7. Verdeck nach den Ansprüchen 1 bis 6, **dadurch gekennzeichnet**, daß an jedem Verdecklager (1) ein Arbeitszylinder (3) angebracht ist.

## Claims

1. A folding top for a vehicle, in particular a motor vehicle, with a folding-top linkage pivotably mounted on folding-top bearings (1) attached to the body, wherein in order to support the opening and closing movement of the folding top an operating cylinder (3) formed by a cylinder (6) and a piston rod (2) engages on the folding-top linkage adjacent to at least one folding-top bearing (1), **characterized in that** the two ends (4) of the piston rod (2) of the operating cylinder (3) are secured in a fixed manner to the folding-top bearing (1), and the cylinder (6) arranged movably on the piston rod (2) is operatively connected to a driving lever (8) which opens and closes the folding top, and the pressure-oil is supplied to the operating cylinder (3) through bores (9) in the stationaiy piston rod (2).

2. A folding top according to Claim 1, **characterized in that** the operating cylinder (3) is constructed in the form of a double-acting cylinder (6).

3. A folding top according to Claim 1, **characterized in that** the piston (5) is mounted centrally on the piston rod (2), and the pressure-oil is supplied alternately from both ends (4) of the piston rod (2) through the bores (9).

4. A folding top according to Claim 1, **characterized in that** the attachment of the driving lever (8) is positioned centrally at one cylinder end (7).

5. A folding top according to Claim 1, **characterized in that** the attachment of the driving lever (8) is positioned eccentrically at one cylinder end (7), and a means to prevent rotation is provided at the other end (7) of the cylinder (6).

6. A folding top according to Claim 5**, characterized in tha**t the means to prevent rotation comprises a pin (10) attached to the cylinder end (7) and sliding in a guide (11) of the folding-top bearing (1).

7. A folding top according to Claims 1 to 6, **characterized in that** an operating cylinder (3) is attached to each folding-top bearing (1).

## Revendications

1. Capote pour véhicule, en particulier pour véhicule automobile, comportant une tringlerie montée pivotante sur des paliers de capote (1), disposés côté carrosserie, un vérin (3), composé d'un cylindre (6) et d'une tige de piston (2), agissant sur la tringlerie de la capote au voisinage d'au moins un palier (1), pour faciliter le mouvement d'ouverture et de fermeture de la capote, caractérisée en ce que les deux extrémités (4) de la tige de piston (2) du vérin (3) sont fixées de manière fixe sur le palier (1) de la capote et le cylindre (6), disposé mobile sur la tige de piston (2), est en liaison active avec un levier d'entraînement (8), ouvrant et fermant la capote pliante et l'arrivée d'huile sous pression au vérin (3) s'effectuant à travers des perçages (9) pratiqués dans la tige de piston (2) fixe.

2. Capote selon la revendication 1, caractérisée en ce que le vérin (3) est un cylindre (6) à double effet.

3. Capote selon la revendication 1, caractérisé en ce que le piston (1) est placé au milieu de la tige de piston (2) et l'arrivée d'huile sous pression s'effectue alternativement à partir des deux extrémités (4) de la tige de piston, à travers les perçages (9).

4. Capote selon la revendication 1, caractérisé en ce que l'attache du levier d'entraînement (8) est placée au milieu, à une extrémité (7) du cylindre.

5. Capote selon la revendication 1, caractérisé en ce que l'attache du levier d'entraînement (8) est placée excentrée sur une extrémité (7) du cylindre et à l'autre extrémité (7) du cylindre (6) est prévu un blocage en rotation.

6. Capote selon la revendication 5, caractérisé en ce que le blocage en rotation est constitué d'une tige (10) fixée à l'extrémité (7) du cylindre, qui glisse dans un guidage (11) du palier (1) de la capote.

7. Capote selon les revendications 1 à 6, caractérisé en ce qu'un vérin (3) est monté sur chaque palier de capote (1).
